# EUROPÄISCHE PATENTSCHRIFT

(11) **EP 4 248 739 B1**
(45) Veröffentlichungstag und Bekanntmachung des Hinweises auf die Patenterteilung: **17.06.2026**
(21) Anmeldenummer: 23160743.3
(22) Anmeldetag: 08.03.2023
(51) Int. Cl.: A01K 1/02

(54) **MODULE BOX, INSBESONDERE FÜR HUNDE UND ANDERE HAUSTIERE**
MODULE BOX, IN PARTICULAR FOR DOGS AND OTHER PETS
BOÎTE MODULAIRE, EN PARTICULIER POUR CHIENS ET AUTRES ANIMAUX DOMESTIQUES

(30) Priorität: 24.03.2022 CH 323202022
(43) Veröffentlichungstag der Anmeldung: 27.09.2023
(73) Patentinhaber: Häuselmann, Patrick, 8910 Affoltern am Albis (CH)
(72) Erfinder: Häuselmann, Patrick, 6345 Neuheim (CH)
(74) Vertreter: Luchs, Willi

(56) Entgegenhaltungen:
- GB-A- 2 571 952
- KR-A- 20030 060 501
- KR-U- 970 015 829
- US-A- 3 611 994
- US-A- 4 256 056
- US-A- 5 121 710
- US-A1- 2009 288 613
- US-A1- 2010 018 966

## Beschreibung

Die Erfindung betrifft eine module Box, insbesondere für Hunde und andere Haustiere, deren Boxwände an ihren gegeneinander stossenden Rändern mit ineinandersteckbaren Verbindungselementen versehen sind.

Derartige Boxen dienen zum Transportieren von Haustieren in Kraftfahrzeugen, wie Autos oder ähnlichen Fahrzeugen. Sie werden hauptsächlich im Rahmen der privaten Tierhaltung eingesetzt, können aber auch etwa im Tierhandel, in Tierarztpraxen und in Zoos eingesetzt werden.

Boxen dieser Art gemäss der Druckschrift WO 2013/049893 A1 bestehen aus mehreren einzelnen Seitenwänden, die mit einer Bodenwand- und einer Deckenwand einen in der Regel prismatischen oder kubischen Kasten bilden, wobei die Boxwände mit lösbaren Verbindungselementen versehen sind, die eine ganz oder teilweise Zerlegung der Boxen in mehrere Einzelwände ermöglichen. Sie besteht aus einer oder mehreren Boxzellen, die mit Verbindungsmitteln zum Verbinden der Zellwände versehen sind. Hierbei weisen die Boden- und Dachwände der Box zahnförmige Schlitze auf, in welche entsprechend dimensionierte Zapfen der mit ihnen zusammenwirkenden Seitenwände einsteckbar sind. Nach dem Zusammenstecken der Wände müssen deren Verbindungen einzeln mittels Klemmelementen gesichert werden. Dieses Zusammenbauen ist umständlich und bedarf des Einsatzes geeigneter Werkzeuge. Der Aufbau der Box mit den mehreren Einzelzellen bringt auch einen relativ grossen Raumbedarf mit sich, der für den Transport der Box in üblichen Personenwagen ungeeignet ist.

Eine Behausung für Tiere gemäss der Druckschrift KR 2003 0060501 besteht aus einer unteren Tragplatte mit seitlichen Schlitzen zum Positionieren der Seitenwände und zudem ist ein mehrteiliger dreidimensionaler Rahmen für das Zusammenhalten der durch die geodätischen Aussenelemente ineinandergefügten Seitenwände mit der Tragplatte sowie der Oberplatte.

In der Druckschrift GB 2571952 A1 ist eine Wand-Baueinheit für ein Tierbehältnis offenbart, bei der ein erster und zweiter Wandpaneel mit je einem Umfangsbereich vorgesehen ist, die einen zweiteiligen Eingriffsmechanismus aufweisen, der einen ersten Teil und einen zweiten Teil bei den Wandpaneelen umfasst. Die ersten und zweiten Teile des Eingriffsmechanismus können zusammengefügt werden, um eine Verbindung zu bilden. Dazu wird ein Halter in die Verbindung eingesetzt, um einer Entkopplung des Eingriffsmechanismus entgegenzuwirken. Sobald die Platten zusammengeschoben sind, um die Verbindung zu bilden, kann die Stange des Halters in den Durchgang geschoben werden, der durch die hakenförmigen Laschen und die Öffnungen in den Seitenwänden gebildet wird. Der Eingriffsmechanismus kann auch mehrere Laschen aufweisen, die in mehrere Fächer eingeführt werden können. Jedes Fach hat eine Öffnung, durch die der Halter eingeführt werden kann, und benachbarte Öffnungen bilden einen Durchgang, der in den Seitenwänden gebildet wird.

Die weitere Druckschrift US 3,611,994 offenbart einen faltbaren Behälter mit einem Bodenplattenelement 12 und vier aufrechten Sockeln, an denen je eine Platte angelenkt ist. Eine Oberseite ist mit einer Kante gelenkig an der Platte befestigt und so angeordnet, dass sie an den anderen drei Platten durch Schraubenverbindungen befestigt werden kann, um das Gehäuse zu bilden. Jede der Platten ist mit einem Scharnier entlang ihrer Unterkante versehen, durch die sie schwenkbar an der Seite der Basis befestigt sind. Die Platte ist mit einem durch Nieten befestigtes Flanschelement versehen. Die Platte bildet einen im rechten Winkel gebogenen Rand, der so angeordnet ist, dass er in einer Nut unter dem Flansch gehalten ist. Die Platte hat beidseitig einen Flansch und die Platte hat korrespondierende Flanschelemente, während jede Seitenkante der Platte im rechten Winkel gebogen ist und jede Kante der Platte im rechten Winkel gebogen ist, um mit den Flanschen an der Vorder- und Rückwand zusammenzupassen und ineinander zu greifen.

Das Dokument KR 970 015 829 weist zwar ineinandersteckbare Verbindungselemente auf. Diese sind aber nicht als Halteelemente ausgebildet, sondern sie sind nicht fixiert, sodass sie ohne weiteres bei Querkräften, welche die Tiere darin ausüben können, auseinanderfallen würden.

Bei einer zusammensteckbaren Hundebehausung gemäss der Druckschrift US 5,121,710 weisen die Wände mehrere darin eingeschnittene Schlitze auf, welche so strukturiert und angeordnet sind, dass dieselben entsprechend positionierte Hakenverlängerungen an den Seitenwänden aufnehmen. Von der Unterkante der Seitenwände und einer Oberkante der Wände ragen mehrere Stifte hervor, welche in korrespondierende Öffnungen in der Basis und dem Dachabschnitt eingepasst werden können.

In der Druckschrift US 4,256,056 ist ein portabler Koffer offenbart, der durch Zusammensetzen eines Paares von Seitenwandbrettern eines oberen Brettes, eines Bodenbrettes und einer linken sowie rechten Seite mit den jeweiligen unteren Endflächen der linken und rechten Seitenwandbretter durch Scharniere verbunden ist. Zudem sind Lagerkörper beim Bodenbrett und korrespondierende Lageröffnungen vorgesehen, in die entsprechende Stäbe der Seitenwandbrettern als Scharnierverbindungen einschiebbar sind. Es sind zudem Steckelemente bei den Seitenwandbrettern und korrespondierende Ausnehmungen bei den schwenkbaren Seiten vorgesehen, um diese türartigen Seiten zu verschliessen.

Das Dokument US 2009/0288613 offenbart eine Haustierkäfiganordnung, die aus zwei Seitenplatten, einer Vorder-, einer Rück-, einer Boden- und einer Oberplatte mit einer Tür besteht. Jede der Seitenplatten umfasst eine obere und eine untere Platte, die jeweils mit Befestigungselementen versehen sind, die sich von zwei Enden derselben nach innen erstrecken, um in Hohlräume einzugreifen, die an entsprechenden Kanten der Vorder- und Rückplatten ausgebildet sind. Zudem sind Durchgangslöcher in den Vorsprüngen von einer jeweiligen Stange durchdrungen, so dass die obere und die untere Platte zu einem integralen Teil zusammengefügt werden können. Ein Benutzer kann Eingriffsabschnitte an den unteren Teilplatten nach aussen drücken und folglich die Vorderplatte nach innen geklappt werden kann.

Ein zusammenklappbarer Behälter gemäss dem Dokument US 2010/0018966 umfasst eine obere Platte, die abnehmbar an der Oberkante der Paare von ersten und zweiten gegenüberliegenden Wänden befestigt ist, und mehrere Eingriffsvorrichtungen, die entlang des Umfangs der oberen Platte und des Bodens sowie entlang der beiden Seitenkanten und der oberen und unteren Kanten der ersten und zweiten gegenüberliegenden Wände positioniert sind. Die Eingriffsvorrichtungen bestehen insbesondere aus Eingriffshaken und Eingriffslaschen bzw. korrespondierende passende Schlitze. Die Eingriffshaken befinden sich entlang zweier gegenüberliegender Seiten des Paares der gegenüberliegenden Wände.

Der Erfindung liegt die Aufgabe zugrunde, diese Nachteile zu vermeiden und eine mobile Box der eingangs genannten Art derart weiterzuentwickeln, dass sie mit einfachen Handgriffen zusammengebaut und wieder zerlegt werden kann, und dass sie im zerlegten Zustand möglichst wenig Platz in Anspruch nimmt.

Die Erfindung ist im beigefügten Anspruchssatz beschrieben. Diese Aufgabe ist erfindungsgemäss dadurch gelöst, dass sich die Verbindungselemente der mobilen Box aus Haltemitteln und aus quer zu ihnen gerichteten Fixiermitteln zusammensetzen.

Erfindungsgemäß sind die Haltemittel als Haken bzw. die Fixermittel als Nocken ausgebildet. Hierbei ist es zum Unterstützen der Haltefunktion der Haken vorteilhaft, wenn die sie aufnehmenden Nuten mit innenseitigen Vorsprüngen versehen sind.

Auf diese Weise ist es möglich, die Boxwände manuell zusammenzustecken oder auseinanderzunehmen, weil die vorgeschlagene Bauweise die Betätigung der mehreren Verbindungselemente durch einfaches Verschieben der einzelnen Boxwände relativ zueinander ermöglicht, ohne dass dafür Werkzeuge erforderlich sind. Zudem können die Boxwände im demontierten Zustand leicht an- oder aufeinander gelegt werden, so dass wenig Platz benötigt wird.

Um die Montage und die Demontage der mobilen Box zu vereinfachen, sind die Haken und Nocken sowie die mit ihnen zusammenwirkenden Nuten entlang der Stosskanten der Box geradlinig in vorzugsweise gleichmässigen Abständen aneinandergereiht, so dass sie jeweils miteinander gleichzeitig in die entsprechenden Nuten der benachbarten Boxwände einschiebbar sind.

Es ist dabei in diesem Sinne vorteilhaft, wenn die Seitenwände an ihren gegeneinander stossenden Rändern nur mit Haltemitteln verbindbar sind, während die Bodenwand und die Deckenwand zusätzlich mit Fixiermitteln versehen sind, deren Nocken in entsprechende Nuten der Frontwand und der Rückwand einschiebbar sind.

Für einer leichtere Handhabung ist es zweckmässig, wenn die plattenförmigen Boxwände aus Kunststoff, vorzugsweise aus Polypropylen, gefertigt sind.

Zum sicheren Transport der mobilen Box kann die Bodenwand im dafür vorgesehenen Fahrzeug oder dergleichen etwa mit Befestigungselementen. wie Schrauben oder ähnlichem, fixiert werden.

Um die Belüftung des Innenraums sicherzustellen, sieht die Erfindung vor, dass die Seitenwände und die Frontwand der Box mit vorzugsweise Belüftungs- bzw. Sichtlöchern versehen sind, die wabenförmig in Reihe ausgebildet sind und in den Grössenabmessungen von oben nach unten kleiner werden, um einer etwaigen Verletzung des in der Box befindlichen Tieres vorzubeugen.

Zwecks eines bequemen Zugangs ins Innere der Box ist die Frontwand und/oder die Rückwand der Box mit einer Tür bzw. einer Klappe versehen sind, die je nach Bedarf entweder seitlich oder um ihre Unterkante schwenkbar sind.

Die Erfindung ist nachfolgend anhand von Ausführungsbeispielen unter Bezugnahme auf die Zeichnung näher erläutert. Es zeigen:
- Fig. 1: eine perspektivische Ansicht auf eine erfindungsgemässe mobile Box mit prismatischer Aussenform;
- Fig. 2: eine perspektivische Teilansicht der Box nach Fig. 1 ohne Deckenwand;
- Fig. 3: eine perspektivische Teilansicht einer Wand der Box nach Fig. 1;
- Fig. 4a: bis Fig. 4f einzelne Ansichten der Boxwände der zerlegten Box nach Fig. 1; und
- Fig. 5: eine Variante einer mobilen Box mit kubischer Aussenform in perspektivischer Draufsicht.

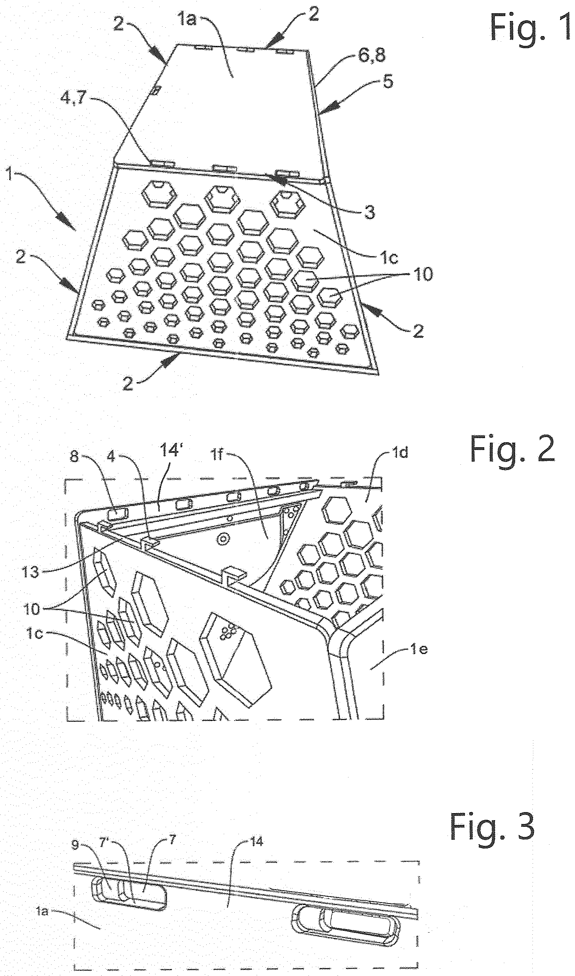

Fig. 1 bis Fig. 3 zeigen eine mobile Box 1 im zusammengebauten Zustand mit einer prismatischen Aussenform, die anatomisch des darin aufgenommenen Tieres angepasst ist. Sie kann daher in ihrer Grösse variieren und aus einem verschieden grossen Typensortiment bestehen. Diese mobile Box dient vorzugsweise zum sicheren behüteten Transportieren von Hunden in dafür geeigneten Personenwagen bzw. Kraftfahrzeugen. Die Box kann aber selbstverständlich überall hingestellt werden, um ein Tier erforderlichenfalls darin zu belassen.

Diese mobile Box 1 setzt sich aus einzelnen Boxwänden zusammen, namentlich einer Bodenwand 1b, einer Deckenwand 1a, einer linken und einer rechten Seitenwand 1c, 1d, einer Frontwand 1e sowie einer Rückwand 1f. Die Bodenwand 1b und die Deckenwand 1a sind rechteckig, während die Seitenwände 1c, 1d trapezförmig und die Frontwand 1e sowie die Rückwand 1f annähernd quadratisch ausgebildet sind.

Erfindungsgemäss sind zum gegenseitigen Verbinden der Boxwände 1a bis 1f diese an ihren gegeneinander stossenden Rändern mit lösbaren Verbindungselementen 2 versehen, die sich aus Haltemitteln 3 mit stirnseitigen Haken 4 und aus quer zu ihnen gerichteten Fixiermitteln 5 mit stirnseitigen Nocken 6 zusammensetzen, wobei die Haken 4 bzw. Nocken 6 der einen Boxwand in entsprechend ausgebildete Nuten 7 bzw. 8 der ihr benachbarten, rechtwinklig zu ihr angeordneten Boxwand einschiebbar sind.

Um dieses Stecken bzw. Auseinandernehmen zu erleichtern, sind die Haken und Nocken sowie die mit ihnen zusammenwirkenden Nuten entlang der Stosskanten der Box geradlinig in vorzugsweise gleichmässigen Zwischenabständen aneinandergereiht angeordnet, so dass die Haken 4 reihenweise in die mit ihnen zusammenwirkenden Nuten 7 durch eine Querverschiebung einrastbar bzw. trennbar sind. Vorzugsweise sind mehrere Haken und Nocken pro Stirnseite 13 bzw. Nuten pro Randseite 14 vorgesehen, vorzugsweise jeweils von einem bis zu zehn Halte- bzw. Fixiermitteln.

Die Boxwände 1a bis 1f sind sehr vorteilhaft plattenförmig und dabei ihre Verbindungselemente 2 bei ihren Stirnseiten 13 bzw. die Nuten 7 bei ihren Randseiten 14 ausgebildet. Dies ermöglicht ein direktes Aufeinanderlegen der Platten im demontierten Zustand, so dass diese wenig Platz benötigen.

Die Boxwände 1a bis 1f sind aus einem Kunststoff, vorzugsweise Polypropylen, hergestellt, welches die notwendige Festigkeit aufweist. Somit sind sie leicht sowie geschmacksneutral, wasserdicht und von -20° bis 80° temperaturbeständig. Im Prinzip könnte aber auch ein Metall, wie Aluminium, oder unterschiedliche Materialien verwendet werden.

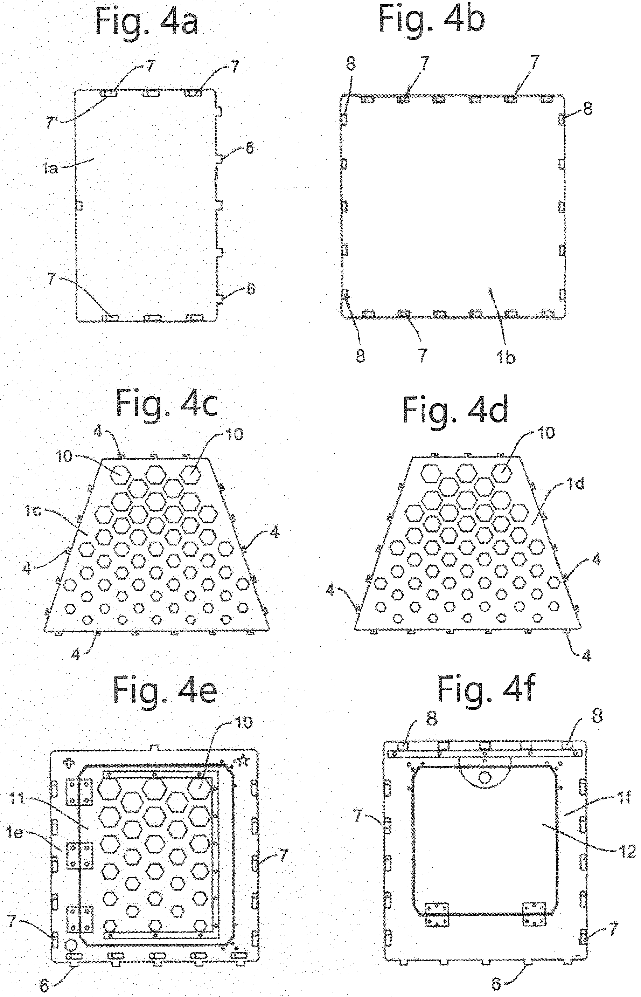

Wie insbesondere aus Fig. 4a bis Fig. 4f hervorgeht, sind die Seitenwände 1c, 1d der Box an ihren gegeneinanderstossenden Rändern nur mit Haltemitteln versehen, welche als Haken 4 an den vier Stirnseiten 13 dieser Seitenwände mit gleichen Abständen zueinander, jedoch mit teils unterschiedlicher Anzahl je nach Länge der Stirnseiten 13 ausgebildet sind. Dies ist möglich, weil die Seitenwände mit vier verschiedenen Wänden verbunden werden. Vorzugsweise sind die Haken 4 bei ihren seitlichen Stirnseiten 13 nach oben ausgerichtet, damit die Frontwand 1e und die Rückwand 1f mit Ihren Nuten 7 von oben in diese Haken 4 einschiebbar und einrastbar sind.

Hingegen die Bodenwand 1b und die Deckenwand 1a sind mit gegenüberliegenden Nuten 7 für die Aufnahme der Haken 4 der Seitenwände 1c, 1d und zusätzlich mit Fixiermitteln 5 versehen, die bei der Bodenwand 1b als Nuten 8 für die Aufnahme der Nocken 6 der Frontwand 1e und der Rückwand 1f vorgesehen sind.

Zum Verstärken der Haltefunktion der Haken 4 weisen die sie aufnehmenden Nuten 7 jeweils eine Durchgangsöffnung 7' und innenseitig einen Vorsprung 9 auf, welche die Haken 4 quer zur Ebene der Boxwände zurückhalten. Durch die Durchgangsöffnung 7' ist ein Haken 4 einschiebbar und diese Vorsprünge 9 sind dabei derart ausgebildet, dass die Haken 4 im montierten Zustand dieselben hintergreifen und zu der Aussenfläche der mit den Nuten 7 versehenen Boxwand nicht vorstehen. Die Haken 4 mit ihren Oberseiten verlaufen im montierten Zustand annähernd bündig zu dieser Aussenfläche, wie dies in Fig. 1 bei der Deckenwand 1a ersichtlich ist.

Fig. 2 zeigt die Position der Rückwand 1f zu den Seitenwänden 1c, 1d im montierten Zustand, bei der die in Reihe angeordneten Nuten 8 in den Randseiten 14' der Rückwand 1f derart oberhalb der Stirnseiten 13 der Seitenwände 1c, 1d verlaufen, dass die auf diesen Stirnseiten 13 auflegbare Deckenwand mit ihren Nuten 7 in diese Haken 4 und gleichzeitig ihre stirnseitig vorstehenden Nocken 6 in die Nuten 8 eingeschoben und arretiert werden. Diese Nuten 8 befinden sich dabei annähernd auf derselben Höhe wie diese Haken 4.

Die Boxwände 1c, 1d und 1e sind mit Belüftungs- bzw. Sichtlöchern 10 versehen, die vorzugsweise mehreckig oder dergleichen ausgebildet sind. Veranschaulicht sind diese wabenförmig, die reiheinweise angeordnet sind und von oben nach unten graduell kleiner werden, um einer Verletzung des darin befindlichen Tieres vorzubeugen. Die Belüftungs- bzw. Sichtlöcher 10 können aber auch ohne weiteres je nach Art des zu befördernden Tieres mit anderen Geometrien versehen sein, sowohl hinsichtlich ihres Öffnungsquerschnitts als auch der Verteilung der Löcher über die Gesamtfläche der einzelnen Boxwände.

Um den Zugang zum Innenraum der Box zu ermöglichen, sind die Frontwand 1e und die Rückwand 1f mit einer seitlich schwenkbaren Tür 11 und/oder einer um ihre Unterkante schwenkbaren Klappe 12 ausgestattet, wobei die Belüftungslöcher 10 der Frontwand 1e aus fertigungstechnischen Gründen innerhalb der Fronttür 11 platziert sind. Die Ausbildung und Anordnung der Zugangsöffnungen kann aber von Fall zu Fall den jeweils geltenden Anforderungen an die Box angepasst werden.

Der Innenraum der Box ist seinerseits der Grösse des aufzunehmenden Tieres anpassbar. Beim beschriebenen Ausführungsbeispiel nach Fig. 1 ist die Box prismatisch mit trapezförmigen Seitenwänden 1c, 1d ausgebildet.

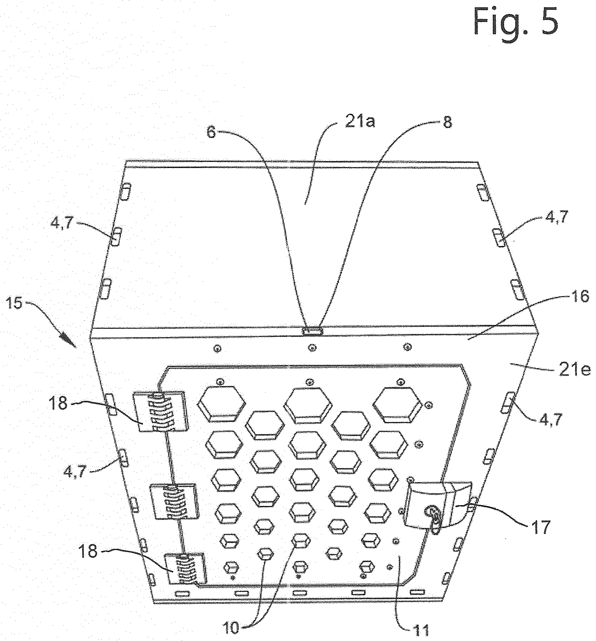

Fig. 5 zeigt eine mobile Box 15 mit einer kubischen Aussenform, bei der die Boxwände jeweils rechteckig und/oder quadratisch ausgebildet sind. Diese Box 15 ist mit denselben Verbindungselementen versehen und ist daher nachfolgend nicht nochmals detailliert erläutert, wobei dieselben Bezugszeichen wie bei der Box 1 angegeben sind. Oberhalb einer sichtbaren Frontwand 21e mit einer Fronttür 11 ist bei der vorderen Längsseite 16 nur ein Verbindungselement mit einem in eine Nut 8 der oberen Deckenwand 21a eingreifenden Nocken 6, hingegen seitlich bei dieser Deckenwand 21a sind jeweils drei paarweise ineinandergreifende Haken 4 und Nuten 7 vorgesehen. Die Haken 4 bei den nicht ersichtlichen Seitenwänden stehen oberseitig bei ihren Stirnseiten vor, so dass sie in die Nuten 7 bei der Deckenwand 21a einrasten können und oberseitig annähernd bündig zur Aussenfläche der Deckenwand verlaufen.

Es ist ferner noch ein verschliessbares Türschloss 17 bei der von Scharnieren 18 schwenkbar gehaltenen Fronttür 11 vorgesehen, damit sie von innen nicht geöffnet werden kann. Dieses Türschloss 17 ist dabei vorzugsweise mit einem betätigbaren Riegel versehen, durch den nach dem Schliessen die Fronttür 11 arretiert ist.

Im Rahmen der Erfindung kann diese Anzahl und Anordnung der Verbindungselemente je nach Bedarf anders gewählt werden. Zudem können bei den Halte- und Fixiermitteln anstelle von Haken auch Druckknöpfe, Keile oder dergleichen und bei den Nuten entsprechende Bohrungen oder Keilnuten vorgesehen sein. Ebenso können bei den Nocken als Fixiermittel Stifte oder ähnliche Elemente verwendet werden.

Es ist darauf zu achten, dass die Haltemittel und die Fixiermittel abwechslungsweise so bei den Stirnseiten bzw. den Randseiten der Boxwände bestückt sind, dass eine einfache Montage bzw. Demontage von letzteren gewährleistet ist. Die beiden Seitenwände 1c, 1d sind mit Vorteil bei allen vier Stirnseiten mit solchen Haken 4 versehen, während die andern Boxwände mit Halte- und Fixiermitteln bestückt sind.

## Patentansprüche

1. Mobile Box, insbesondere für Hunde und andere Haustiere, deren Boxwände (1a bis 1f) an ihren gegeneinander stossenden Rändern mit ineinandersteckbaren Verbindungselementen (2) versehen sind, wobei die Verbindungselemente (2) jeweils Haltemittel (3) und quer zu diesen gerichtete Fixiermittel (5) bei den Boxwänden (1a bis 1f) aufweisen, durch welche die Boxwände (1a bis 1f) jeweils mit ihren benachbarten Boxwänden derart steckbar bzw. trennbar sind, dass dies insbesondere von Hand ohne Werkzeuge erfolgen kann, wobei die Haltemittel (3) aus Haken (4) und die Fixiermittel (5) aus wegragenden Nocken (6) jeweils bei den Stirnseiten (13) der Boxwände (1a bis 1f) und Nuten (7, 8) in den Randseiten (14) von benachbarten, rechtwinklig dazu angeordneten Boxwänden (1a bis 1f) vorgesehen sind, durch welche die Haken (4) bzw. Nocken (6) in diese Nuten (7, 8) steckbar sind, wobei die mit den Haken (4) zusammenwirkenden Nuten (7) mit je einer Durchlassöffnung (7') und einem innenseitigen Vorsprung (9) versehen sind, die derart ausgebildet sind, dass die Haken (4) jeweils in eine korrespondierende Nut (7) einschiebbar sind und im montierten Zustand diesen Vorsprung (9) hintergreifen, wobei die Seitenwände (1c, 1d) als Boxwände der Box (1) an ihren gegeneinanderstossenden Rändern nur mit Haltemitteln (3) verbindbar sind, während die Bodenwand (1b) und die Deckenwand (1a) als Boxwände zusätzlich mit Fixiermitteln (5) versehen sind, deren Nocken (6) bzw. Nuten (8) in korrespondierende Nuten (8) bzw. Nocken (6) der Frontwand (1e) und der Rückwand (1f) als Boxwände verbindbar sind.

2. Mobile Box nach Anspruch 1, **dadurch gekennzeichnet, dass** die Haken (4) im gesteckten Zustand zu der Aussenfläche der jeweiligen mit den Nuten (7) versehenen Boxwand nicht vorstehen.

3. Mobile Box nach Anspruch 1 oder 2, **dadurch gekennzeichnet, dass**
die Haken (4) und Nocken (6) sowie die mit ihnen zusammenwirkenden Nuten (7, 8) entlang von Stosskanten der Box geradlinig in vorzugsweise gleichmässigen Abständen aneinandergereiht sind.

4. Mobile Box nach einem der Ansprüche 1 bis 3, **dadurch gekennzeichnet, dass**
die Boxwände (1a bis 1f) plattenförmig und dabei die Verbindungselemente (2) bei ihren Stirnseiten (13) bzw. die Nuten (8) bei ihren Randseiten (14) ausgebildet sind.

5. Mobile Box nach einem der Ansprüche 1 bis 4, **dadurch gekennzeichnet, dass**
die Position der Rückwand (1f) zu den Seitenwänden (1c, 1d) im montierten Zustand, bei der die in Reihe angeordneten Nuten (8) in den Randseiten (14') der Rückwand (1f) derart oberhalb der Stirnseiten (13) der Seitenwände (1c, 1d) verlaufen, dass die auf diesen Stirnseiten (13) auflegbare Deckenwand (1a) mit ihren Nuten (7) in diese Haken (4) und gleichzeitig ihre stirnseitig vorstehenden Nocken (6) in die Nuten (8) der Rückwand (1f) einschiebbar und arretiebar sind.

6. Mobile Box nach einem der Ansprüche 1 bis 5, **dadurch gekennzeichnet, dass**
insbesondere die Bodenwand (1b) der Box (1) in einem für den Tiertransport vorgesehenen Fahrzeug mit Befestigungselementen, wie Schrauben oder ähnlichem, fixierbar ist.

7. Mobile Box nach einem der Ansprüche 1 bis 6, **dadurch gekennzeichnet, dass**
vorzugsweise die Seitenwände (1c, 1d) und die Frontwand (1e) der Box mit Belüftungs- bzw. Sichtlöchern (10) versehen sind, die vorzugsweise mehreckig wabenförmig ausgebildet und reihenweise von oben nach unten in der Grössenabmessungen kleiner dimensioniert sind.

8. Mobile Box nach Anspruch 7, **dadurch gekennzeichnet, dass** die Frontwand (1e) und/oder die Rückwand (1f) mit einer seitlich schwenkbaren Tür (11) bzw. einer um ihre Unterkante schwenkbaren Klappe (12) versehen sind.

9. Mobile Box nach Anspruch 7 oder 8, **dadurch gekennzeichnet, dass**
die Belüftungs- bzw. Sichtlöcher (10) der Frontwand (1e) innerhalb der Fronttür (11) der Box platziert sind.

10. Mobile Box nach einem der Ansprüche 1 bis 9, **dadurch gekennzeichnet, dass**
die Box (1) im zusammengebauten Zustand eine prismatische, kubische oder ähnliche Aussenform aufweist.

11. Mobile Box nach einem der Ansprüche 1 bis 10, **dadurch gekennzeichnet, dass**
die Boxwände (1a bis 1f) aus Kunststoff, beispielsweise Polypropylen, hergestellt sind.

## Claims

1. A mobile box, in particular for dogs and other pets, the box walls (1a to 1f) of which are provided at their abutting edges with interlocking connecting elements (2), wherein the connecting elements (2) each comprise retaining means (3) and fixing means (5) directed transversely thereto on the box walls (1a to 1f), by means of which the box walls (1a to 1f) can be connected to or separated from their adjacent box walls in such a way that this can be done, in particular, by hand without the use of tools, wherein the retaining means (3) consist of hooks (4) and the fixing means (5) consist of protruding cams (6) provided respectively on the end faces (13) of the box walls (1a to 1f) and grooves (7, 8) in the side faces (14) of adjacent box walls (1a to 1f) arranged at right angles thereto, into which the hooks (4) or cams (6) can be inserted (7, 8), wherein the grooves (7) that engage with the hooks (4) are each provided with a through-opening (7') and an internal projection (9), which are designed such that the hooks (4) can each be inserted into a corresponding groove (7) and, when assembled, engage behind this projection (9), whereby the side walls (1c, 1d), as walls of the box (1), can be connected at their abutting edges solely by retaining means (3), whilst the base wall (1b) and the top wall (1a), as walls of the box, are additionally provided with fixing means (5), the cams (6) or grooves (8) of which can be connected to corresponding grooves (8) or cams (6) of the front wall (1e) and the rear wall (1f) as box walls.

2. Mobile box according to claim 1, **characterised in that**
the hooks (4), when engaged, do not protrude beyond the outer surface of the relevant box wall fitted with the grooves (7).

3. Mobile box according to claim 1 or 2, **characterised in that** the hooks (4) and cams (6), as well as the grooves (7, 8) that engage with them, are arranged in a straight line along the edges of the box, preferably at regular intervals.

4. Mobile box according to any of claims 1 to 3, **characterised in that** the box walls (1a to 1f) are plate-shaped, with the connecting elements (2) formed at their end faces (13) and the grooves (8) formed at their edge faces (14).

5. Mobile box according to any of claims 1 to 4, **characterised in that** the position of the rear wall (1f) relative to the side walls (1c, 1d) when assembled, in which the grooves (8) arranged in a row in the edge sides (14') of the rear wall (1f) run above the end faces (13) of the side walls (1c, 1d) such that the top wall (1a), which can be placed on these end faces (13), can be inserted and locked with its grooves (7) into these hooks (4) and, at the same time, with its end-face protruding cams (6) also being inserted and locked into the grooves (8) of the rear wall (1f).

6. Mobile box according to any of claims 1 to 5, **characterised in that** in particular, the base wall (1b) of the box (1) can be secured using fasteners such as screws or similar in a vehicle designed for transporting animals.

7. Mobile box according to any of claims 1 to 6, **characterised in that** the side walls (1c, 1d) and the front wall (1e) of the box are preferably provided with ventilation or viewing holes (10), which are preferably polygonal, honeycombshaped and arranged in rows from top to bottom, with the dimensions decreasing in size.

8. Mobile box according to claim 7, **characterised in that**
the front wall (1e) and/or the rear wall (1f) are fitted with a door (11) that swings open to the side or a flap (12) that swings open about its lower edge.

9. Mobile box according to claim 7 or 8, **characterised in that** the ventilation or viewing holes (10) in the front wall (1e) are located inside the front door (11) on the box.

10. Mobile box according to any of claims 1 to 9, **characterised in that** the box (1) has a prismatic, cubic or similar external form when assembled.

11. Mobile box according to any of claims 1 to 10, **characterised in that** the box walls (1a to 1f) are made of plastic, such as polypropylene.

## Revendications

1. Boîte mobile, en particulier pour chiens et autres animaux domestiques, dont les parois (1a à 1f) sont pourvues sur leurs bords, en aboutement les uns par rapport aux autres, d'éléments (2) d'assemblage pouvant s'enficher l'un dans l'autre, dans laquelle les éléments (2) d'assemblage ont, aux parois (1a à 1f) de la boîte, respectivement des moyens (3) de maintien et des moyens (5) de fixation dirigés transversalement à ceux-ci, par lesquels les parois (1a à 1f) de la boîte peuvent être enfichées respectivement dans leurs parois de boîte voisines ou en être séparées, de manière à ce que cela puisse s'effectuer, en particulier à la main sans outil, dans laquelle les moyens (3) de maintien sont constitués de crochets (4) et les moyens (5) de fixation d'ergots (6) en saillie, prévus respectivement aux faces (13) frontales des parois (1a à 1f) de la boîte et d'encoches (7, 8) dans les faces (14) de bord de parois (1a à 1f) de la boîte voisines, disposées à angle droit de celles-ci, par lesquelles les crochets (4) ou les ergots (6) peuvent être enfichés dans ces encoches (7, 8), dans laquelle les encoches (7) coopérant avec les crochets (4) sont pourvues respectivement d'une ouverture (7') et d'une saillie (9) du côté intérieur, qui sont constituées, de manière à ce que les crochets (4) puissent chacun être glissés dans une encoche (7) correspondante et, à l'état monté, s'accrocher derrière cette saillie (9), dans laquelle les parois (1c, 1d) latérales peuvent être assemblées, comme parois de la boîte (1), sur leurs bords en aboutement seulement par des moyens (3) de maintien, tandis que la paroi (1b) de fond et la paroi (1a) de couvercle sont pourvues, comme parois de boîte, supplémentairement de moyens (5) de fixation, dont les ergots (6) ou les encoches (8) peuvent être assemblés dans des encoches (8) ou ergots (6) correspondants de la paroi (1e) avant et de la paroi (1f) arrière.

2. Boîte mobile suivant la revendication 1, **caractérisée en ce que**
les crochets (4), à l'état enfiché, ne sont pas en saillie de la surface extérieure de la paroi de la boîte pourvue des encoches (7).

3. Boîte mobile suivant la revendication 1 ou 2, **caractérisée en ce que**
les crochets (4) et les ergots (6) ainsi que les encoches (7, 8) coopérant avec eux sont rangés les uns à côté des autres le long de bords en aboutement de la boîte d'une manière rectiligne, de préférence à des distances égales.

4. Boîte mobile suivant l'une des revendications 1 à 3, **caractérisée en ce que**
les parois (1a à 1f) de la boîte sont en forme de plaque et les éléments (2) d'assemblage sont constitués sur leurs faces (13) frontales et respectivement les encoches (8) sur leurs faces (14) de bord.

5. Boîte mobile suivant l'une des revendications 1 à 4, **caractérisée en ce que**
la position de la paroi (1f) arrière par rapport aux parois (1c, 1d) latérales est telle, dans l'état monté, que les encoches (8) disposées en rangée dans les faces (14') de bord de la paroi (1f) arrière s'étendent au-dessus des faces (13) frontales des parois (1c, 1d) latérales, de manière à ce que la paroi (1a) de plafond pouvant être mise sur ces faces (13) frontales, puisse par ses encoches (7), être glissée et bloquée dans ces crochets (4) et en même temps leur ergots (6) en saillie du côté frontal, être glissés et bloqués dans les encoches (8) de la paroi (1f) arrière.

6. Boîte mobile suivant l'une des revendications 1 à 5, **caractérisée en ce que**,
en particulier, la paroi (1b) de fond de la boîte (1) peut être fixée par des éléments de fixation, comme des vis ou analogues, dans un véhicule prévu pour le transport d'un animal.

7. Boîte mobile suivant l'une des revendications 1 à 6, **caractérisée en ce que**,
de préférence, les parois (1c, 1d) latérales et la paroi (1e) avant de la boîte sont pourvues de trous (10) d'aération ou de visibilité, qui sont constitués, de préférence en forme de nid d'abeille polygonal, et qui sont dimensionnés plus petit en dimension par rangée du haut vers le bas.

8. Boîte mobile suivant la revendication 7, **caractérisée en ce que**
la paroi (1e) avant et/ou la paroi (1f) sont pourvues d'une porte (11) pivotante latéralement ou d'un volet (12) pivotant autour de son bord inférieur.

9. Boîte mobile suivant la revendication 7 ou 8, **caractérisée en ce que**
les trous (10) d'aération ou de visibilité de la paroi (1e) avant sont placés dans la porte (11) avant de la boîte.

10. Boîte mobile suivant l'une des revendications 1 à 9, **caractérisée en ce que**
la boîte (1) à l'état monté a une forme prismatique, cubique ou une forme extérieure analogue.

11. Boîte mobile suivant l'une des revendications 1 à 10, **caractérisée en ce que**
les parois (1a à 1f) de la boîte sont en une matière plastique, par exemple en polypropylène.
